# EUROPEAN PATENT APPLICATION

(11) **EP 4 148 283 A1**
(43) Date of publication of application: **15.03.2023**
(21) Application number: 22194964.7
(22) Date of filing: 09.09.2022
(51) Int. Cl.: F04D 29/28, F04D 29/30, B33Y 80/00, F04D 29/02

(54) **TURBOMACHINERY ROTOR WITH VARIABLE LATTICE DENSITIES**

(30) Priority: 10.09.2021 US 202117472121
(71) Applicant: Hamilton Sundstrand Corporation, Charlotte, NC 28217 (US)
(72) Inventor: MERRITT, Brent J., Southwick (US); KILCHYK, Viktor, Lancaster (US)
(74) Representative: Dehns

(57) **Abstract**

A rotor (26) for a rotary machine in includes a hub (100) centered on a central axis and having a disk portion (120) and a shaft portion (118), a blade (102) extending outward from the hub (100), and a variable lattice structure (142) in an interior of the rotor (26). The variable lattice structure (142) includes a first region (150) of the rotor (26) having a first lattice structure and a second region (152) of the rotor (26) having a second lattice structure. The second lattice structure of the second region (152) is denser than the first lattice structure of the first region (150). The second region (152) is a deflection region or a stress region of the rotor (26).

## Description

### TECHNICAL FIELD

The present disclosure relates to aircraft environmental control systems, and in particular, to a turbomachinery rotor for a cabin air compressor.

### BACKGROUND

Cabin air compressors are used in environmental control systems in aircraft to condition air for delivery to an aircraft cabin. Conditioned air is air at a temperature, pressure, and humidity desirable for aircraft passenger comfort and safety. At or near ground level, the ambient air temperature and humidity is often sufficiently high that the air must be cooled as part of the conditioning process before being delivered to the aircraft cabin. At flight altitude, ambient air is often far cooler than desired, but at such a low pressure that it must be compressed to an acceptable pressure as part of the conditioning process. Compressing ambient air at flight altitude heats the resulting pressurized air sufficiently that it must be cooled, even if the ambient air temperature is very low. Thus, under most conditions, heat must be removed from the air by the air cycle machine before the air is delivered to the aircraft cabin.

A cabin air compressor can be used to compress air for use in an environmental control system. The cabin air compressor includes a motor to drive a compressor section that in turn compresses air flowing through the cabin air compressor. This compressor section includes a rotor, which transfers rotational energy from the motor to a fluid. The rotor is surrounded by a rotor shroud which improves rotor efficiency and protects the surrounding components in case of rotor failure.

### SUMMARY

A rotor for a rotary machine in includes a hub centered on a central axis and having a disk portion and a shaft portion, a blade extending outward from the hub, and a variable lattice structure in an interior of the rotor. The variable lattice structure includes a first region of the rotor having a first lattice structure and a second region of the rotor having a second lattice structure. The second lattice structure of the second region is denser than the first lattice structure of the first region. The second region is a deflection region or a stress region of the rotor.

A rotary machine includes a tie rod extending through the rotary machine and a rotor mounted on the tie rod. The rotor includes a hub having a disk portion and a shaft portion, a bore extending through a center of the hub and through which the tie rod extends, and a blade extending outward from the hub. A variable lattice structure in in an interior of the rotor. The variable lattice structure includes a first region of the rotor having a first lattice structure and a second region of the rotor having a second lattice structure. The second lattice structure of the second region is denser than the first lattice structure of the first region. The second region is a deflection region or a stress region of the rotor.

### BRIEF DESCRIPTION OF THE DRAWINGS

FIG. 1 is cross-sectional view of a cabin air compressor.
FIG. 2A is a perspective view of a first side of a rotor of the cabin air compressor.
FIG. 2B is a perspective view of a second side of the rotor of the cabin air compressor.
FIG. 3 is a cross-sectional view of the rotor taken axially along a hub and along a centerline of a blade.
FIG. 4 is a cross-sectional view of the rotor positioned in the cabin air compressor.
FIG. 5 is a flowchart showing a method of manufacturing the rotor.

### DETAILED DESCRIPTION

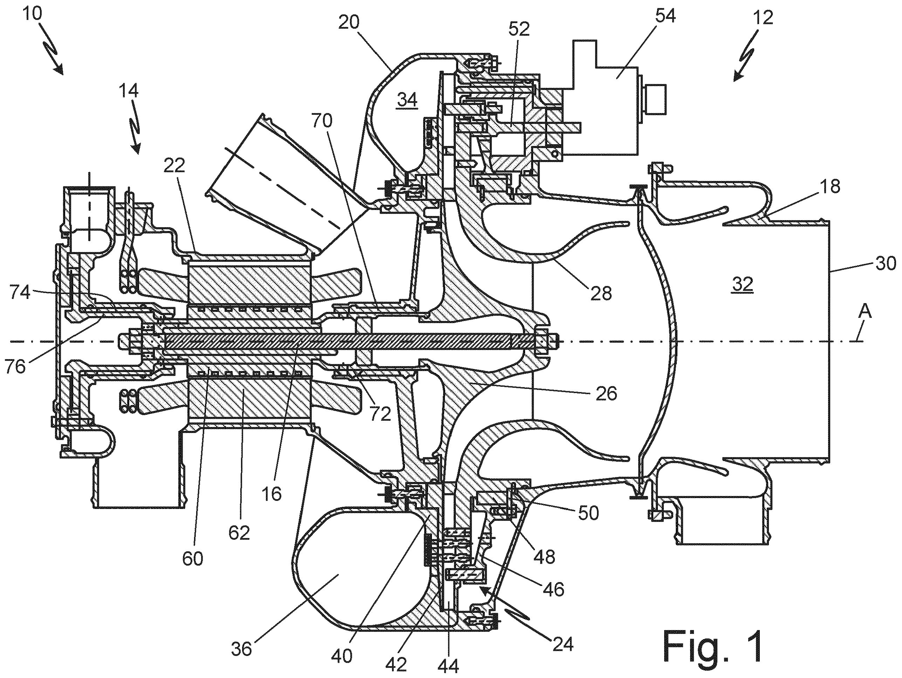

FIG. 1 is a cross-sectional view of cabin air compressor 10. Cabin air compressor 10 includes compressor section 12, motor section 14, tie rod 16, compressor inlet housing 18, compressor outlet housing 20, motor housing 22, variable diffuser 24, rotor 26, and rotor shroud 28. Compressor inlet housing 18 includes inlet 30 and inlet duct 32. Compressor outlet housing 20 includes outlet duct 34 and outlet 36. Variable diffuser 16 includes backing plate 40, inboard plate 42, diffuser vanes 44, drive ring 46, drive ring bearing 48, backup ring 50, pinion 52, and variable diffuser actuator 54. Motor section 14 includes motor rotor 60 and motor stator 62. Cabin air compressor 10 further includes first journal bearing 70, first rotating shaft 72, second journal bearing 74, and second rotating shaft 76. FIG. 1 also shows axis A.

Cabin air compressor 10 includes compressor section 12 and motor section 14 mounted on tie rod 16. Tie rod 16 is configured to rotate about axis A. Compressor section 12 includes compressor inlet housing 18 and compressor outlet housing 20 that are connected to one another. Motor section 14 includes motor housing 22, which is connected to compressor outlet housing 20. Variable diffuser 24 is positioned between compressor inlet housing 18 and compressor outlet housing 20. Rotor 26 is positioned between compressor inlet housing 18 and compressor outlet housing 20. Rotor 26 is mounted on tie rod 16, which rotatably connects rotor 26 and motor section 14. Rotor shroud 28 is positioned radially outward from and partially surrounds compressor rotor 26.

Compressor inlet housing 18 includes inlet 30 and inlet duct 32. Inlet 30 is positioned at a first end of compressor inlet housing 18. Inlet duct 32 extends from inlet 30 through compressor inlet housing 18 to rotor 26. Compressor outlet housing 20 includes outlet duct 34 and outlet 36. Outlet duct 34 extends through compressor outlet housing 20 from rotor 26 to outlet 36. Variable diffuser 16 includes backing plate 40, inboard plate 42, diffuser vanes 44, drive ring 46, drive ring bearing 48, pinion 50, backup ring 52, and variable diffuser actuator 54. Backing plate 40 abuts compressor outlet housing 20 on a first side and inboard plate 42 on a second side. Inboard plate 42 abuts backing plate 40 on a first side and diffuser vanes 44 on a second side. Diffuser vanes 44 abut inboard plate 42 on a first side and rotor shroud 28 on a second side. Diffuser vanes 44 are configured to direct the compressed air from rotor 26 into outlet duct 34. Drive ring 46 is positioned radially outward from rotor shroud 28, and drive ring bearing 48 is positioned between driver ring 46 and rotor shroud 28. Drive ring 46 abuts rotor shroud 28 on a first side and backup ring 50 on a second side. Backup ring 50 is positioned radially outward of rotor shroud 28. Pinion 52 is connected to variable diffuser actuator 54 and is coupled to drive ring 46. Pinion 52 permits control of variable diffuser 16. Drive ring 46 is coupled to diffuser vanes 44 with pins, and as drive ring 46 is rotated it will drag diffuser vanes 44 and cause them to rotate.

Motor section 14 includes motor housing 22, motor rotor 60, and motor stator 62. Motor housing 22 surrounds motor rotor 60 and motor stator 62. Motor rotor 60 is disposed within motor stator 62 and is configured to rotate about axis A. Motor rotor 60 is mounted to tie rod 16 to drive rotation of tie rod 16.

Motor rotor 60 of motor section 14 drives rotation of shafts in cabin air compressor 10, which in turn rotate rotor 26. The rotation of rotor 26 draws air into inlet 30 of compressor inlet housing 18. The air flows through inlet duct 32 to rotor 26 and will be compressed by rotor 26. The compressed air is then routed through variable diffuser 16 and into outlet duct 34 of compressor outlet housing 20. The air then exits cabin air compressor 10 through outlet 36 of compressor outlet housing 20 and can be routed to another component of an environmental control system, such as an air cycle machine.

Cabin air compressor 10 further includes first journal bearing 70, first rotating shaft 72, second journal bearing 74, and second rotating shaft 76. First journal bearing 70 is positioned in compressor section 12 and is supported by compressor outlet housing 20. First rotating shaft 72 extends between and rotates with rotor 26 and motor rotor 60. Motor rotor 60 drives rotation of rotor 26 with first rotating shaft 72. A radially outer surface of first rotating shaft 72 abuts a radially inner surface of first journal bearing 70. Second journal bearing 74 is positioned in motor section 14 and is supported by motor housing 22. Second rotating shaft 76 extends from and rotates with motor rotor 60. A radially outer surface of second rotating shaft 76 abuts a radially inner surface of second journal bearing 74.

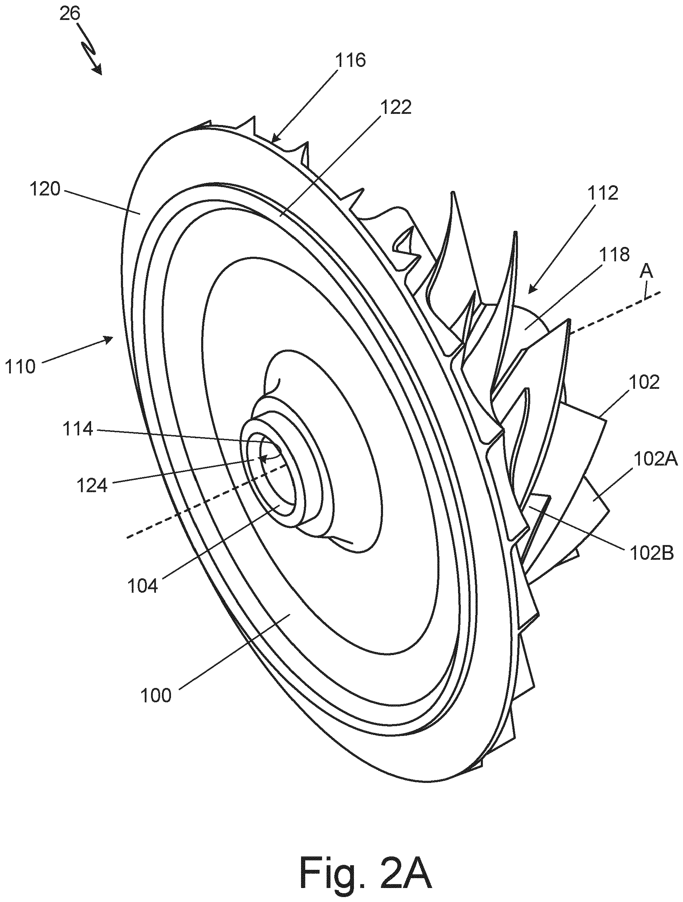

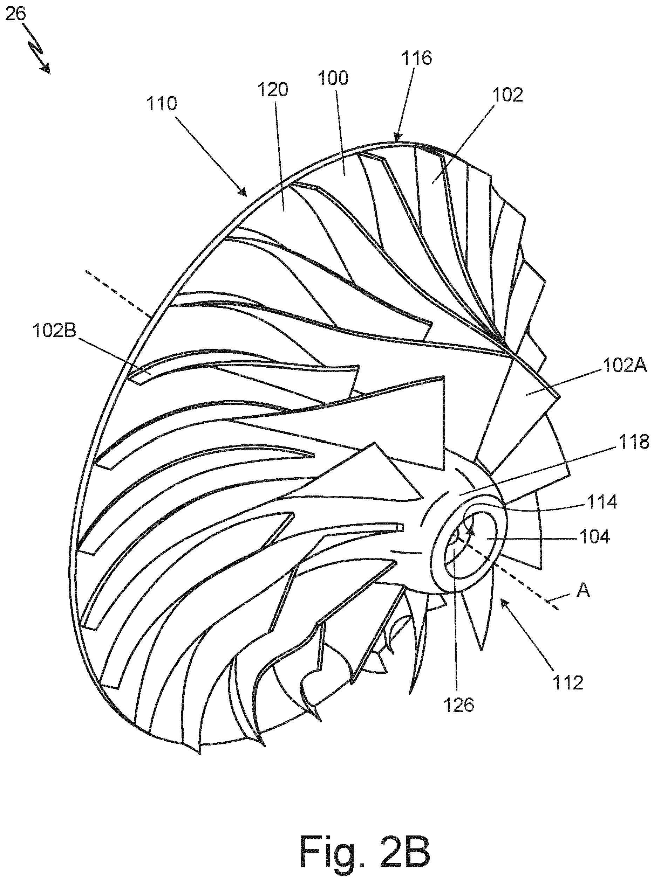

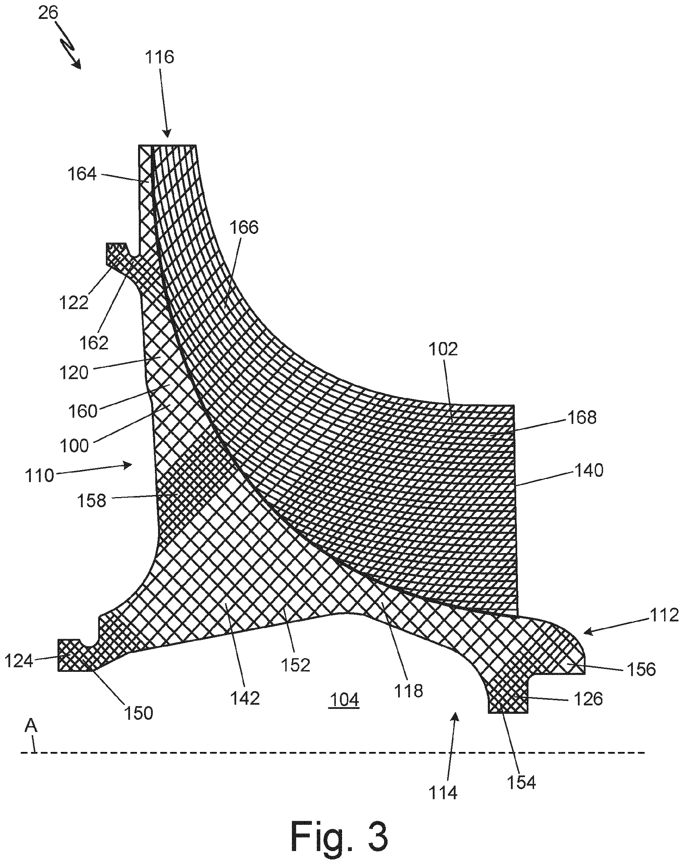

FIG. 2A is a perspective view of a first side of rotor 26 of cabin air compressor 10. FIG. 2B is a perspective view of a second side of rotor 26 of cabin air compressor 10. FIG. 3 is a cross-sectional view of rotor 26 taken axially along hub 100 and along a centerline of blade 102. FIGS. 2A- 3 will be discussed together. Rotor 26 includes hub 100, blades 102 (including long blades 102A and short blades 102B), and bore 104 (shown in FIGS. 2A-2B). Hub 100 includes first side 110, second side 112, radially inner end 114, radially outer end 116, shaft portion 118, disk portion 120, first flange 122 (shown in FIGS. 2A and 3), second flange 124 (shown in FIGS. 2A and 3), and third flange 126 (shown in FIGS. 2B-3). As shown in FIG. 3, rotor 26 further includes exterior surface 140 and lattice structure 142, which includes first region 150, second region 152, third region 154, fourth region 156, fifth region 158, sixth region 160, seventh region 162, and eighth region 164 in hub 100, and ninth region 166 and tenth region 168 in blades 102.

Rotor 26 includes hub 100 and blades 102 attached to and extending outward from hub 100. Blades 102 include long blades 102A and short blades 102B. Bore 104 extends through a center of hub 100 and a tie rod of a rotary machine can extend through bore 104. Hub 100 has first side 110 and second side 112 opposite of first side 110. Hub 100 also has radially inner end 114 and radially outer end 116 opposite of radially inner end 114. Radially inner end 114 defines bore 104 extending through hub 100 of rotor 26.

Hub 100 has shaft portion 118 that extends axially from first side 110 to second side 112 of hub 100 along axis A. Disk portion 120 extends radially outwards from shaft portion 118 toward radially outer end 116 of hub 100 near first end 110 of hub 100. Hub 100 further includes first flange 122, second flange 124, and third flange 126. First flange 122 is positioned on disk portion 120 near radially outer end 116 of hub 100 and extends axially outward from first side 110 of hub 100. Second flange 124 is positioned on shaft portion 118 at first side 110 of hub 110 and extends axially outward from first side 110 of hub 100. Third flange 126 is positioned on shaft portion 118 near second side 112 of hub 100 and extends radially inward from shaft portion 118 of hub 100.

Blades 102 are positioned on hub 100 and extend radially and axially outward from hub 100. Blades 102 include long blades 102A that extend along disk portion 120 and shaft portion 118 of hub 100 from radially outer end 116 to second side 112 of hub 100. Blades 102 also include short blades 102B that extend along disk portion 120 from radially outer end 116 to a point about midway between first end 110 and second end 112 of hub 100.

Hub 100 and blades 102 further include exterior surface 140 that surrounds lattice structure 142 in an interior of hub 100 and blades 102. Exterior surface 140 is a solid, continuous surface. Lattice structure 142 is a varying lattice structure. Lattice structure 142 has regions with varying densities. FIG. 3 is a cross-sectional view of rotor 26 taken axially along hub 100 and along a centerline of one long blade 102A. As shown in FIG. 3, lattice structure 142 has first region 150, second region 152, third region 154, fourth region 156, fifth region 158, sixth region 160, seventh region 162, and eighth region 164 in hub 100, and ninth region 166 and tenth region 168 in blades 102. Lattice structure 142 may vary gradually or abruptly between regions. Lattice structure 142 includes members arranged in a 3D crisscrossing pattern with voids between the members. As shown in FIG. 3, lattice structure 142 varies in density by having a varying distribution of the members and voids of lattice structure 142. In alternate embodiments, lattice structure 142 can vary in density by varying the thickness of the members, by having varying geometrical configurations, and/or by varying fillet radii on joints between the members.

First region 150 is a region of lattice structure 142 positioned in second flange 124 and a part of shaft portion 118 of hub 100 adjacent first end 110 of hub 100. Second region 152 is a region of lattice structure 142 in shaft portion 118 of hub 100 and extending into a part of disk portion 120 adjacent shaft portion 118 of hub 100. Third region 154 is a region of lattice structure 142 in third flange 126 and a part of shaft portion 118 of hub 100 near second end 112 of hub 100. Fourth region 156 is a region of lattice structure 142 in a part of shaft portion 118 adjacent second end 112 of hub 100. Fifth region 158 is a region of lattice structure 142 positioned in disk portion 120 near shaft portion 118 of hub 100. Sixth region 160 is a region of lattice structure 142 positioned in disk portion 120 of hub 100. Seventh region 162 is a region of lattice structure 142 in first flange 122 of hub 100 and extending into disk portion 120 near first flange 122 of hub 100. Eighth region 164 is a region of lattice structure 142 in disk portion 120 adjacent to radially outer end 116 of hub 100. Ninth region 166 is a region of lattice structure 142 in a portion of blade 102 extending along disk portion 120 of hub 100. Tenth region 168 is a region of lattice structure 142 in a portion of blade 102 extending along shaft portion 118 of hub 100.

In the embodiment shown in FIG. 3, first region 150, third region 154, fifth region 158, seventh region 162, ninth region 166, and tenth region 168 have a greater density than second region 152, fourth region 156, sixth region 160, and eighth region 164. Rotor 26 is additively manufactured, allowing lattice structure 142 to be manufactured with different densities in different areas of rotor 26. Any suitable additive manufacturing process (also known as a 3D printing process) can be used to manufacture rotor 26, including, for example, direct metal laser sintering, electron beam freeform fabrication, electron-beam melting, selective laser melting, or selective laser sintering. Rotor 26 can be made out of any material that can be used in an additive manufacturing process, including any of stainless steel, corrosion-resistant steel, nickel-chromium alloy, titanium, aluminum, synthetic fiber, fiberglass, composites, and combinations thereof.

Traditional rotors for rotary machines have solid cross-sections and are manufactured by forging and/or subtractive manufacturing processes, such as hogout. Additively manufacturing rotor 26 allows lattice structure 142 to be used in rotor 26. Using lattice structure 142 in rotor 26 allows rotor 26 to have a reduced weight compared to traditional rotors, as there are voids between the lattice structure. At the same time, rotor 26 will have an equivalent strength as traditional rotors due to the increased strength of lattice structure 142.

Further, the density of lattice structure 142 is varied to optimize mechanical properties of rotor 26 locally and generally. Mechanical properties of rotor 26, such as stress, strain, and stiffness can be optimized to improve the performance of rotor 26 by reducing stress in high stress regions of rotor 26 and reducing strain and increasing stiffness in deflection regions of rotor 26. Reducing stress and strain in local regions of rotor 26 can also reduce stress and strain in rotor 26 generally. Reducing the stresses in high stress regions can reduce the failure rate of rotor 26 and, thus, the failure rate of cabin air compressor 10. Reduced failure rates result in reduced down time, reduced repairs, and reduced costs. Reducing the strain and increasing the stiffness in deflection regions can reduce the tolerances between blades 102 of rotor 26 and rotor shroud 28. Reducing the tolerances between blades 102 of rotor 26 and rotor shroud 28 increases the compression efficiency of cabin air compressor 10, as more air is forced through rotor 26 and into variable diffuser 24.

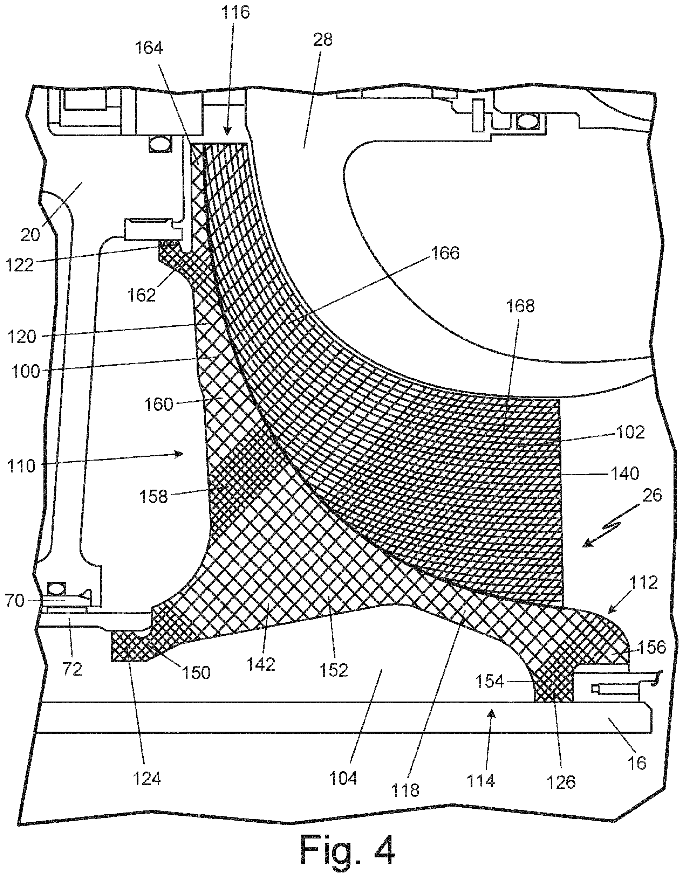

FIG. 4 is a cross-sectional view of rotor 26 positioned in cabin air compressor 10. FIG. 4 shows tie rod 16, compressor outlet housing 20, rotor 26, rotor shroud 28, first journal bearing 70, and first rotating shaft 72 of cabin air compressor 10. Rotor 26 includes hub 100, blades 102, and bore 104. Hub 100 includes first side 110, second side 112, radially inner end 114, radially outer end 116, shaft portion 118, disk portion 120, first flange 122, second flange 124, and third flange 126. As shown in FIG. 4, rotor 26 further includes exterior surface 140 and lattice structure 142, which includes first region 150, second region 152, third region 154, fourth region 156, fifth region 158, sixth region 160, seventh region 162, and eighth region 164 in hub 100, and ninth region 166 and tenth region 168 in blades 102.

Cabin air compressor 10 has the structure and design as described above in reference to FIG. 1. Rotor 26 has the structure and design as described above in reference to FIGS. 2A-3. Rotor 26 is mounted on tie rod 16. First flange 122 of hub 100 of rotor 26 forms a labyrinth seal that seals against compressor outlet housing 20. As rotor 26 rotates with tie rod 16, the labyrinth seal on first flange 122 will rotate against compressor outlet housing 20, which is a stationary component of cabin air compressor 10. Second flange 124 of hub 100 of rotor 26 abuts and rotates with first rotating shaft 72. Third flange 126 of hub 100 of rotor 26 abuts and rotates with tie rod 16. Third flange 126 of hub 100 mounts rotor 26 to tie rod 16. Rotor shroud 28 is positioned radially outward from rotor 26 and partially surrounds rotor 26.

Hub 100 has seventh region 162 of lattice structure 142 in first flange 122 and extending into disk portion 120 of hub 100. Seventh region 162 is a deflection region of hub 100, which is a region of hub 100 that is subject to deflection during operation of rotor 26. As rotor 26 rotates with tie rod 16, first flange 122 will rotate against compressor outlet housing 20 and subject seventh region 162 to deflection. Seventh region 162 of lattice structure 142 is an area of increased density that aids in deflection management during operation of rotor 26 to reduce and prevent deflection of rotor 26. By reducing and preventing deflection during operation of rotor 26, the efficiency of cabin air compressor 10 can be increased.

Hub 100 has fifth region 158 of lattice structure 142 in disk portion 120 near shaft portion 118. Fifth region 158 is a deflection region of hub 100, which is a region of hub 100 that is subject to deflection during operation of rotor 26. As rotor 26 rotates with tie rod 16, fifth region 158 will be subjected to deflection. Fifth region 158 of lattice structure 142 is an area of increased density that aids in deflection management during operation of rotor 26 to reduce and prevent deflection of rotor 26. By reducing and preventing deflection during operation of rotor 26, the efficiency of cabin air compressor 10 can be increased.

Blades 102 have ninth region 166 and tenth region 168 of lattice structure 142. Ninth region 166 is a region of lattice structure 142 in a portion of blade 102 extending along disk portion 120 of hub 100. Tenth region 168 is a region of lattice structure 142 in a portion of blade 102 extending along shaft portion 118 of hub 100. Ninth region 166 and tenth region 168 are deflection regions of rotor 26, which are regions of rotor 26 that are subject to deflection during operation of rotor 26. Ninth region 166 and tenth region 168 both have an increased density compared to second region 152, fourth region 156, sixth region 160, and eighth region 164. Blades 102 are subject to deflection during operation of rotor 26 and thus have an increase density to prevent deflection of blades 102. Tenth region 168 also has an increased density compared to ninth region 166. Tenth region 168 is a region of blades 102 that forms the tips of blades 102 that are subject to higher deflection. Tenth region 168 has a greater density to prevent deflection in the tips of blades 102.

There is a gap between blades 102 of rotor 26 and rotor shroud 28 to prevent contact between blades 102 of rotor 26 and rotor shroud 28. Contact between blades 102 and rotor shroud 28 may damage both components and cause failure of cabin air compressor 10. The gap between blades 102 and rotor shroud 28 has to account for deflection that hub 100 and blades 102 of rotor 26 can be subjected to during operation of rotor 26. Thus, the more deformation that hub 100 and blades 102 are subjected to during operation of rotor 26, the larger the gap needs to be to ensure component safety. However, air can leak from cabin air compressor 10 through the gap, which leads to inefficiencies in cabin air compressor 10. Thus, it is desirable to minimize the gap between blades 102 of rotor 26 and rotor shroud 28. Identifying deflection regions of hub 100 and blades 102 and increasing the density of lattice structure 142 in the deflection regions (for example, fifth region 158, seventh region 162, ninth region 166, and tenth region 168) reduces and prevents the deflections and strain that hub 100 and blades 102 are subjected to during operation of rotor 26 by increasing the stiffness in these areas. This reduced deflection and strain and increased stiffness means that the parts deform less when in operation. If hub 100 and blades 102 undergo less deflection, the gap between blades 102 of rotor 26 and rotor shroud 28 can be reduced. Reducing the gap increases the efficiency of cabin air compressor 10, as more air is forced through rotor 26 and into variable diffuser 24.

Hub 100 has first region 150 of lattice structure 142 in second flange 124 and extending into shaft portion 118. First region 150 is a stress region of hub 100, which is a region of hub 100 that is subject to high stress during operation of rotor 26. The high stress in stress regions of rotor 26, such as first region 150, is a higher stress than stresses present in other regions of rotor 26. As rotor 26 rotates with tie rod 26, second flange 124 will rotate with first rotating shaft 72 and subject first region 150 to high stress. First region 150 of lattice structure 142 is an area of increased density that aids in stress reduction during operation of rotor 26 to reduce the stress in first region 150 of hub 100. Stress reduction at critical points of hub 100 leads to increased longevity of rotor 26.

Hub 100 has third region 154 of lattice structure 142 in third flange 126 and extending into shaft portion 118. Third region 154 is a stress region of hub 100, which is a region of hub 100 that is subject to high stress during operation of rotor 26. The high stress in stress regions of rotor 26, such as third region 154, is a higher stress than stresses present in other regions of rotor 26. As rotor 26 rotates with tie rod 26, third flange 126 will rotate with tie rod 26 and subject third region 154 to high stress. Third region 154 of lattice structure 142 is an area of increased density that aids in stress reduction during operation of rotor 26 to reduce the stress in third region 154 of hub 100. Stress reduction at critical points of hub 100 leads to increased longevity of rotor 26.

Reducing stress in stress regions of rotor 26 will also improve the longevity of rotor 26. Reducing the stresses at stress regions can reduce the failure rate of rotor 26 as well as the failure rate of cabin air compressor 10 overall. During operation, these failures can be damage components surrounding rotor 26, such as rotor shroud 28, as these components are required to contain the energy of the failure for safety of the aircraft and its passengers. Reduced failure rates result in reduced down time, reduced repairs, and reduced costs.

Rotor 26 is one example of a rotor in which variable lattice structure 142 can be used. In alternate embodiments, variable lattice structure 142 can be used in any suitable rotor, for example a turbine rotor, having any design. Further, cabin air compressor 10 is one example of a turbomachinery or rotary machine in which rotor 26 or any other rotor with variable lattice structure 142 can be used. In alternate embodiments, rotor 26 or any other rotor with variable lattice structure 142 can be used in an air cycle machine or any other rotary machine.

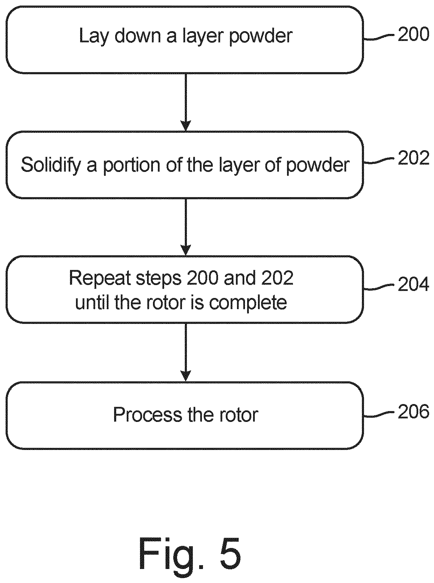

FIG. 5 is a flowchart showing a method of manufacturing rotor 26. FIG. 5 shows steps 200-206. Step 200 includes laying down a layer of powder. Step 202 solidifying a portion of the layer of powder. Step 204 includes repeating steps 200 and 202 until rotor 26 is completed. Step 206 includes processing rotor 26.

Rotor 26 can be manufactured using an additive manufacturing process. Additive manufacturing involves manufacturing rotor 26 layer by layer. Additive manufacturing processes allow complex internal and external shapes and geometries to be manufactured that are not feasible or possible with traditional manufacturing. A typical additive manufacturing process involves using a computer to create a three-dimensional representation of rotor 26. The three-dimensional representation will be converted into instructions which divide rotor 26 into many individual layers. These instructions are then sent to an additive manufacturing device. This additive manufacturing device will print each layer, in order, and one at a time until all layers have been printed. Any additive manufacturing process can be used, including direct metal laser sintering, electron beam freeform fabrication, electron-beam melting, selective laser melting, selective laser sintering, or other equivalents that are known in the art.

Step 200 includes laying down a layer of powder. The powder can be made of a material selected from the group consisting of stainless steel, corrosion-resistant steel, nickel-chromium alloy, titanium, aluminum, synthetic fiber, fiberglass, composites, and combinations thereof. This powder may be laid down by a roller, pressurized gas, or other equivalents that are known in the art. This powder may have any grain size, wherein the grain size of the powder affects the unprocessed surface properties of rotor 26.

Step 202 includes solidifying a portion of the layer of powder. A portion of the layer of powder can be solidified by applying energy to layer of powder. Any energy source can be used, including laser beam, electron beams, or other equivalents that are known in the art. The application of this energy will solidify the powder in a specific configuration. The specific configuration of solidified metal will be entirely dependent on which layer the process is currently at. This specific configuration will be in a specific shape and distribution so that when combined with the other layers, it forms rotor 26.

Step 204 includes repeating steps 200 and 202 until rotor 26 is completed. These two steps together lead to rotor 26 being built layer by layer to completion. The specific configuration of step 202 consists of exterior surface 140, which is continuous and solid, and lattice structure 142, which has a varying density. The density of lattice structure 142 can be locally optimized to reduce stress or strain in specific regions. Reducing the stresses at high stress regions can reduce the failure rate of rotor 26 and thus the failure rate of cabin air compressor 10. Reduced failure rates result in reduced down time, reduced repairs, and reduced costs. Reduced strain, and thus reduced deflection, at deflection regions means that the parts deform less when in operation. If hub 100 and blades 102 undergo less deflection, the tolerances between components of cabin air compressor 10 can be reduced. Reducing tolerances between components increases the efficiency of cabin air compressor 10.

Step 206 includes processing rotor 26. Step 206 is an optional step. Processing rotor 26 can include post processing steps, such as smoothing of exterior surface 140 of rotor 26 or removal of powder from an interior of rotor 26. Since an additive manufacturing process is used, exterior surface 140 of rotor 26 may be rougher than desired. Through sanding, brushing, buffing, grinding, and combinations thereof, exterior surface 140 of rotor 26 may be made smoother. Removal of the powder from an interior of rotor 26 can involve the process of removing the unsolidified powder between lattice structure 142 through high pressure gas, mechanical movements, or other methods know in the art.

### Discussion of Possible Embodiments

The following are non-exclusive descriptions of possible embodiments of the present invention.

A rotor for a rotary machine in includes a hub centered on a central axis and having a disk portion and a shaft portion, a blade extending outward from the hub, and a variable lattice structure in an interior of the rotor. The variable lattice structure includes a first region of the rotor having a first lattice structure and a second region of the rotor having a second lattice structure. The second lattice structure of the second region is denser than the first lattice structure of the first region. The second region is a deflection region or a stress region of the rotor.

The rotor of the preceding paragraph can optionally include, additionally and/or alternatively, any one or more of the following features, configurations and/or additional components:
The rotor has a continuous exterior solid surface surrounding the variable lattice structure.
The stress region of the rotor is a region of the rotor that is subject to higher stress than other regions of the rotor.

The stress region of the rotor is a flange extending axially outward from the shaft portion of the hub.

The stress region of the rotor is a flange extending radially inward from the shaft portion of the hub.

The deflection region of the rotor is a region of the rotor that is subject to deflections.

The deflection region of the rotor is a flange extending axially outward from the disk portion of the hub.

The deflection region of the rotor is an area of the disk portion of the hub adjacent to the shaft portion of the hub.

The deflection region of the rotor is the blade.

The deflection region of the rotor is an area of the blade positioned adjacent to the shaft portion of the hub.

The rotor is made of a material selected from the group consisting of stainless steel, corrosion-resistant steel, nickel-chromium alloy, titanium, aluminum, synthetic fiber, fiberglass, composites, and combinations thereof.

A rotary machine includes a tie rod extending through the rotary machine and a rotor mounted on the tie rod. The rotor includes a hub having a disk portion and a shaft portion, a bore extending through a center of the hub and through which the tie rod extends, and a blade extending outward from the hub. A variable lattice structure in in an interior of the rotor. The variable lattice structure includes a first region of the rotor having a first lattice structure and a second region of the rotor having a second lattice structure. The second lattice structure of the second region is denser than the first lattice structure of the first region. The second region is a deflection region or a stress region of the rotor.

The rotary machine of the preceding paragraph can optionally include, additionally and/or alternatively, any one or more of the following features, configurations and/or additional components:
The stress region of the rotor is a region of the rotor that is subject to higher stress than other regions of the rotor.
The stress region of the rotor is a flange extending axially outward from the shaft portion of the hub that abuts a rotating shaft of the rotary machine.
The stress region of the rotor is a flange extending radially inward from the shaft portion of the hub that abuts the tie rod.
The deflection region of the rotor is a region of the rotor that is subject to deflections.
The deflection region of the rotor is a flange extending axially outward from the disk portion of the hub that seals against a stationary component of the rotary machine.
The deflection region of the rotor is an area of the disk portion of the hub adjacent to the shaft portion of the hub.
The deflection region of the rotor is the blade.
The deflection region of the rotor is an area of the blade positioned adjacent to the shaft portion of the hub.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A rotor for a rotary machine comprising:
a hub centered on a central axis and having a disk portion and a shaft portion;
a blade extending outward from the hub; and
a variable lattice structure in an interior of the rotor, the variable lattice structure comprises:
a first region of the rotor having a first lattice structure; and
a second region of the rotor having a second lattice structure;
wherein the second lattice structure of the second region is denser than the first lattice structure of the first region; and
wherein the second region is a deflection region or a stress region of the rotor.

2. The rotor of claim 1, wherein the rotor has a continuous exterior solid surface surrounding the variable lattice structure.

3. The rotor of claim 1 or 2, wherein the stress region of the rotor is a flange extending axially outward from the shaft portion of the hub.

4. The rotor of any of claims 1, 2 or 3, wherein the stress region of the rotor is a flange extending radially inward from the shaft portion of the hub.

5. The rotor of any preceding claim, wherein the deflection region of the rotor is a flange extending axially outward from the disk portion of the hub.

6. The rotor of any preceding claim, wherein the rotor is made of a material selected from the group consisting of stainless steel, corrosion-resistant steel, nickel-chromium alloy, titanium, aluminum, synthetic fiber, fiberglass, composites, and combinations thereof.

7. A rotary machine comprising:
a tie rod extending through the rotary machine; and
a rotor mounted on the tie rod, wherein the rotor comprises:
a hub having a disk portion and a shaft portion;
a bore extending through a center of the hub and through which the tie rod extends;
a blade extending outward from the hub; and
a variable lattice structure in an interior of the rotor, the variable lattice structure comprises:
a first region of the rotor having a first lattice structure; and
a second region of the rotor having a second lattice structure;
wherein the second lattice structure of the second region is denser than the first lattice structure of the first region; and
wherein the second region is a deflection region or a stress region of the rotor.

8. The rotor of any of claims 1 to 6, or the rotary machine of claim 7, wherein the stress region of the rotor is a region of the rotor that is subject to higher stress than other regions of the rotor.

9. The rotary machine of claim 7 or 8, wherein the stress region of the rotor is a flange extending axially outward from the shaft portion of the hub that abuts a rotating shaft of the rotary machine.

10. The rotary machine of any of claims 7, 8 or 9, wherein the stress region of the rotor is a flange extending radially inward from the shaft portion of the hub that abuts the tie rod.

11. The rotor of any of claims 1 to 6 or 8, or the rotary machine of any of claims 7 to 10, wherein the deflection region of the rotor is a region of the rotor that is subject to deflections.

12. The rotary machine of any of claims 7 to 11, wherein the deflection region of the rotor is a flange extending axially outward from the disk portion of the hub that seals against a stationary component of the rotary machine.

13. The rotor of any of claims 1 to 6, 8 or 11, or the rotary machine of any of claims 7 to 12, wherein the deflection region of the rotor is an area of the disk portion of the hub adjacent to the shaft portion of the hub.

14. The rotor of any of claims 1 to 6, 8, 11 or 13, or the rotary machine of any of claims 7 to 13, wherein the deflection region of the rotor is the blade.

15. The rotor of any of claims 1 to 6, 8, 11, 13 or 14 or the rotary machine of any of claims 7 to 14, wherein the deflection region of the rotor is an area of the blade positioned adjacent to the shaft portion of the hub.
